(19) Europäisches Patentamt / European Patent Office / Office européen des brevets

(11) **EP 0 920 945 B1**

(12) **EUROPEAN PATENT SPECIFICATION**

(45) Date of publication and mention
of the grant of the patent:
**08.08.2007 Bulletin 2007/32**

(51) Int Cl.:
***B23H 7/06*** (2006.01)

(21) Application number: **98309887.2**

(22) Date of filing: **02.12.1998**

(54) **Wire discharge machining control device with taper machining correction feature**

Vorrichtung zur Steuerung von Drahtfunkenerosionsprozessen mit
Konusbearbeitungskorrekturfähigkeit

Dispositif de commande pour machine d'usinage par électroérosion permettant de faire des corrections
pour les usinages coniques

(84) Designated Contracting States:
**CH LI**

(30) Priority: **03.12.1997 JP 34734997**

(43) Date of publication of application:
**09.06.1999 Bulletin 1999/23**

(73) Proprietor: **FANUC LTD**
**Minamitsuru-gun,**
**Yamanashi 401-0597 (JP)**

(72) Inventor: **Kinoshita, Mitsuo**
**Hachiouji-shi,**
**Tokyo 192-0371 (JP)**

(74) Representative: **Billington, Lawrence Emlyn et al**
**Haseltine Lake**
**Lincoln House**
**300 High Holborn**
**London WC1V 7JH (GB)**

(56) References cited:
**EP-A- 0 246 333**    **US-A- 4 467 166**
**US-A- 4 801 779**    **US-A- 4 843 203**

**Description**

<u>TECHNICAL FIELD</u>

This invention relates to numerical control method for a wire electric discharge machine that performs taper machining.

<u>BACKGROUND ART</u>

Well known are wire electrical discharge machines with which taper machining can be performed by imparting an inclination to a wire electrode (hereinafter referred to merely as a wire) supported at its upper end and lower end and moving the work horizontally, relatively with respect to the wire. In most of these machines, in general, while feeding work in the horizontal dimension, moving a table on which the work is placed along the X and Y axes to perform overall taper machining, an inclination is imparted to the wire by moving an upper wire guide (or lower wire guide) supporting the wire horizontally, relative to the lower guide (or upper guide), along U and V axes, and thus regulating the taper angle at the cut faces of the work. Ordinarily, the U axis parallels the X axis, and the V axis parallels the Y axis.

Shapes to be contour-machined and angles of taper at the cut faces are given in advance by a program. The wire discharge machining control device translates this program at the actual process stage, and controls servo motor drives by determining work movement amounts for performing the taper machining given by the program, based on speed signals from an electrical discharge machining power supply, that is, the amounts of horizontal movement of the table along the X and Y axes, and determining horizontal movement amounts for either the upper wire guide or lower wire guide in order to achieve the taper angle given by the program, that is, the amounts of movement along the U and V axes.

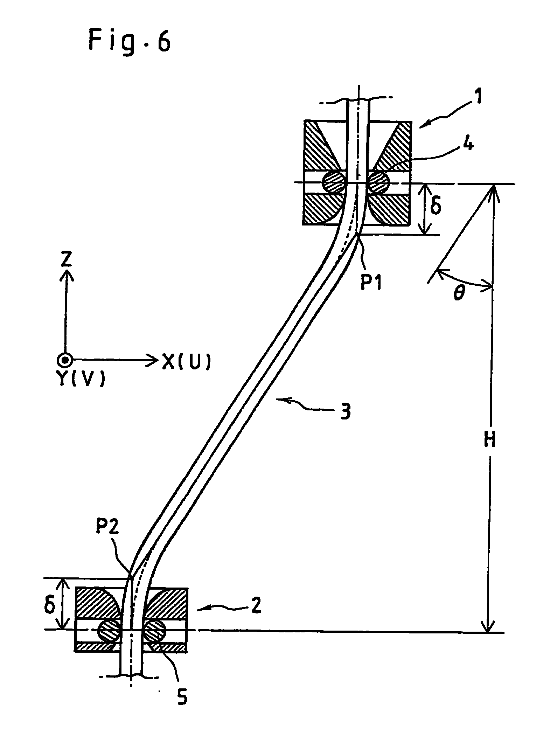

Fig. 6 represents the usual configuration seen around the working parts of a wire electrical discharge machine. In Fig. 6, item 1 is an upper wire guide and 2 is a lower wire guide. A wire 3 used in electrical discharge machining is strung between the upper wire guide 1 and the lower wire guide 2. Between the upper wire guide and the lower wire guide there is a table, on which work is placed, which moves along X and Y axes. The work is subjected to overall taper machining by moving the table horizontally.

As noted above, the upper wire guide 1 or the lower wire guide 2 are fashioned so that they can move along U and V axes, parallel to the X and Y axes. A wire discharge machining control device determines horizontal movement amounts for the upper wire guide 1 or the lower wire guide 2, that is, movement quantities along the U and V axes, and thus controls the positions of the wire guides 1 and 2 so as to achieve a taper angle given by a program.

In other words, the taper angle provided by the program is automatically converted by the wire discharge machining control device to horizontal movement quantities for the upper wire guide 1 or lower wire guide 2 along the U and V axes, and the inclination in the wire 3 required for the machining is achieved by the horizontal movement of the upper wire guide 1 or the lower wire guide 2. The required horizontal movement in the upper wire guide 1 or the lower wire guide 2 will be directly affected by the perpendicular clearance H between the upper wire guide 1 and lower wire guide 2, that is, by the size of the perpendicular clearance between the positions of the supports at the upper and lower ends of the wire 3.

In a simple example, in order to place the wire 3 in Fig. 6 on the X-Z plane at an angle of $\theta$ with respect to the Z axis (vertical axis), the amount of movement of the upper wire guide 1 (or lower wire guide 2) along the U and V axes will be $U = H \times \tan \theta$ and $V = 0$.

The supports 4 and 5 that constitute major parts of the upper wire guide 1 and lower wire guide 2, as shown in Fig. 6, are made from a superhard material such as ruby or diamond, made in a circular arc shape, that slides against the wire 3. In the prior art, the perpendicular clearance between these supports 4 and 5 is defined as the perpendicular clearance between the upper wire guide 1 and lower wire guide 2, and horizontal movement quantities of the upper wire guide 1 (or lower wire guide 2) along the U and V axes are found.

However, due to the rigidity of the wire 3 itself the effective upper-end support point P1 (point where wire 3 bends) falls slightly below the upper wire guide 1, while the effective lower-end support point P2 (point where wire 3 bends) rises slightly above the lower wire guide 2. In Fig. 6, moreover, it is assumed that the upper wire guide 1 and lower wire guide 2 are of identical structure, so that the amounts of aforementioned downward displacement and upward displacement are both designated by $\delta$.

Thus if values for horizontal movements of the upper wire guide 1 and lower wire guide 2 along the U and V axes are determined using the perpendicular clearance H between the upper wire guide 1 and lower wire guide 2 as is, in the condition where the perpendicular clearance between the upper-end support position P1 and lower-end support position P2 becomes shorter than the perpendicular clearance H between the upper wire guide 1 and lower wire guide 2, that is, becomes $(H - 2\delta)$, for example, then the taper angle of the wire 3 will be larger than the command inclination angle $\theta$ as initially commanded, so that accurate taper machining cannot be done, which constitutes a problem.

In the example shown in Fig. 6, furthermore, if the upper guide 1 is moved by H x tan θ along the U axis in an attempt to impart the command angle θ to the wire 3, the relationship between the actual inclination angle φ of the wire 3 between the upper wire guide 1 and lower wire guide 2 and the command angle θ for the wire 3 becomes

$$\tan \phi = H \times \tan \theta / (H - 2S) = \tan \theta / (1 - 2S/H),$$

so that the actual inclination angle φ of the wire 3 becomes greater than the command angle θ.

The problem that a wire electrode has effective upper and lower end support points which are displaced from the upper and lower wire guide supports is already recognised in EP-A-0246333. In this document, however, the phenomenon is seen as a problem only when the direction in which a wire electrode proceeds along a table during a machining process is changed to make a turn during a taper machining process. In order to overcome this problem, a combined step is followed in which the tension applied to the wire electrode is decreased and the machining current is decreased also, but only when a turn is made.

According to the present invention there is provided a numerical control method for a wire electrical discharge machine that performs taper machining, on a work secured to a machining table, by a wire supported by wire guides in a configuration comprising an X axis and a Y axis along which the machining table or a first wire guide moves in an X-Y plane, and a U axis and a V axis along which a second wire guide moves in a U-V plane that lies parallel to the X-Y plane, the method being characterised by steps of: storing in advance, in memory, a table indicating the upward and downward displacements of the wire support positions of the first and second wire guides which correspond to respective wire electrode inclination angles; computing, at successive control periods, wire electrode inclination angles from the deviations between the position vectors of the first wire guide relative to the second wire guide in the X-Y plane and in the U-V plane; obtaining the upward and downward displacements in the wire support positions of the first and second wire guides from the computed wire electrode inclination angles using said table, and then converting the obtained upward and downward displacements in the wire support positions to determine horizontal-direction correction vectors in the X-Y plane and the U-V plane for the respective wire guides; and correcting, based on those determined correction vectors, the position of the processing table or the first wire guide and/or the second wire guide.

In one development of the present invention, the upward and downward displacements indicated by said table are Z-axis displacements of effective support points of the first and second wire guides.

Also, the correcting of the position of the processing table or the first wire guide and the second wire guide may be effected by dividing correction quantities corresponding to said obtained Z-axis displacements, into components for said X, Y, U and V axes, applying these components to those axes, and correcting wire guide positions.

In an alternative embodiment, the displacements indicated by the aforementioned table are correction quantities of support points of the first and second wire guides in the X-Y and U-V plane, and said correcting of the position of the processing table or the first wire guide and the second wire guide is effected by dividing said correction quantities into components for said X, Y, U and V axes, applying these components to those axes, and correcting wire guide positions.

When the present invention is implemented, commanded wire inclination angles can be accurately reproduced, and proper wire discharge taper machining performed, even when, due to wire rigidity, displacements arise in the effective upper-end support position or lower-end support position of the wire guides.

Thus shape errors and dimensional errors can be prevented from occurring in taper machining using wire discharge machining, so that taper machining can be accomplished with accurate shaping.

The present invention will now be described by way of examples and with reference to the accompanying drawings in which:

Fig. 1 is a diagram for explaining how wire inclination angles are corrected using a correcting feature of the present invention;
Fig. 2 is a conceptual diagram indicating the paths of wire movement corrected using a correcting feature of the present invention;
Fig. 3 is a theoretical diagram representing a measurement method for determining the relationship between actual wire inclination angles and displacements in wire support positions corresponding thereto;
Fig. 4 is a conceptual diagram of one example of a displacement memory file;
Fig. 5 is a conceptual diagram of another example of a displacement memory file;
Fig. 6 is a conceptual diagram showing the general configuration surrounding machining parts in a wire electrical discharge machine;
Fig. 7 is a block diagram of the major parts of a discharge processing numerical control device and wire electrical discharge machine;

Fig. 8 is a flowchart of the major parts of preprocessing routines performed by a numerical control device; and
Fig. 9 is a flowchart of the major parts of pulse distribution processing routines performed by a numerical control device.

Next, one embodiment of the present invention is described.

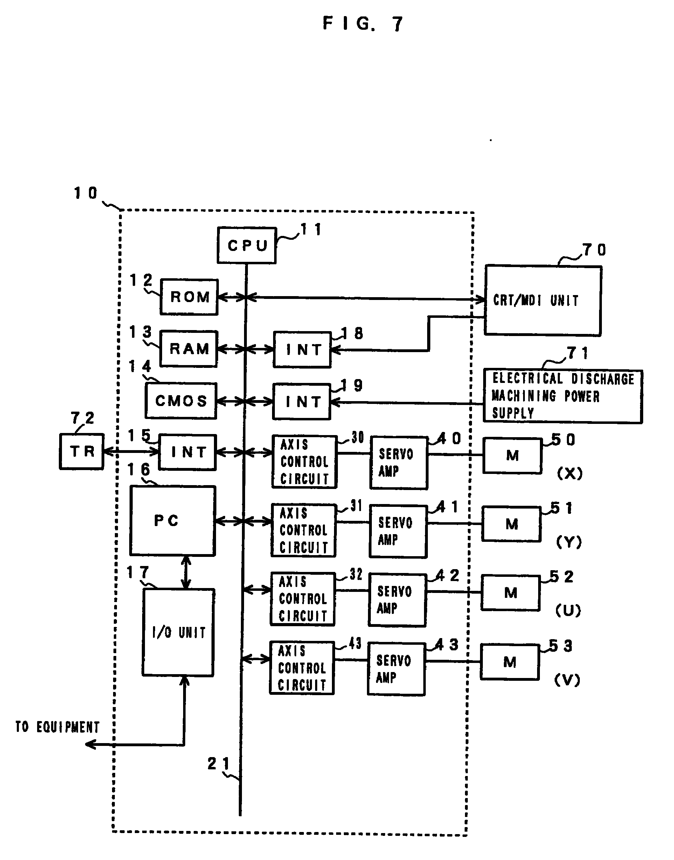

Fig. 7 is a block diagram of the main parts of a numerical control device 10 serving as a control device for electric discharge machining, and a wire electrical discharge machine that is drive-controlled by the numerical control device 10, according to one embodiment of the present invention.

A processor 11 is a processor for performing overall control of the numerical control device 10, reading out a system program stored in a ROM 12 via a bus 21, and performing overall control of the numerical control device 10 following the system program. Temporary computational data and display data, etc., are stored in a RAM 13. A CMOS memory 14, backed up by a battery (not shown in the drawings), is configured as a nonvolatile memory wherein the stored contents are maintained even when the power supply of the numerical control device 10 is turned off, provided for storing the displacement memory files, described below, etc.

An interface 15 provides the interface to external equipment, through which are connected such external equipment 72 as a paper tape reader, paper tape puncher, or floppy disk drive. Machining programs are read in from the external equipment, and machining programs edited inside the numerical control device 10 can also be output to the external equipment 72.

A programmable controller 16 controls the wire electrical discharge machine using sequence programs built into the numerical control device 10. More specifically, following functions commanded by the machining program, signals needed by the wire electrical discharge machine are converted to by these sequence programs and output to the wire electrical discharge machine from an I/O unit 17. These output signals manipulate various actuators in wire travel systems and so forth in the wire electrical discharge machine. The programmable controller 16 receives signals generated by various switches on a machine control panel and buffer limit switches in the wire electrical discharge machine, subjects them to necessary processing, and passes them on to the processor 11.

The current positions of the individual axes, alarms, parameters, and image data and other image signals are sent to the display unit of a CRT/MDI unit 70 and displayed on the display device. An interface 18 receives data from the keyboard of the CRT/MDI unit 70 and passes them to the processor 11. An interface 19 is connected to an electrical discharge machining power supply 71 for receiving speed commands therefrom. This electrical discharge machining power supply 71 monitors the wire and work discharge conditions and communicates speed commands, inclusive of forward and reverse commands, to the processor 11.

Axis control circuits 30 to 33 receive axis movement commands from the processor 11 and output axis commands to servo amplifiers 40 to 43. The servo amplifiers 40 to 43 receive these commands and drive servo motors 50 to 53 for the axes. The servo motors 50 to 53 for the X and Y and the U and V axes have built in pulse encoders for detecting position speeds. From these pulse encoders, feedback signals are fed back to the axis control circuits 30 to 33. Servo controlling CPUs built into the several axis control circuits 30 to 33 perform routines, namely a position loop, a speed loop, and a current loop, based on the feedback signals and on the movement commands mentioned earlier, determine torque commands for each axis for final drive control, and control the positions and speeds of the servo motors 50 to 53 for the individual axes.

In order to impart corrections to the movement amounts of the upper wire guide 1 and lower wire guide 2 along the U and V axes to achieve the taper angles provided by the NC program, it is necessary to determine the relationship between the actual inclination angle $\phi$ of the wire 3 and the corresponding upward or downward displacement $\delta$ in the wire support positions corresponding thereto, and to register this in a displacement memory file of the numerical control device 10, as will be described below.

Accordingly, a description is first given of a measurement method for finding, in this embodiment, the relationship between the actual inclination angle $\phi$ of the wire 3 and the corresponding upward and downward displacements in the wire support positions corresponding thereto.

In this embodiment, moreover, the configuration is made one wherein the lower wire guide 2 is moved along the X and Y axes in performing overall taper machining, and the upper wire guide 1, riding on the lower wire guide 2, moves along the U and V axes to regulate the taper angle of work cross-sections.

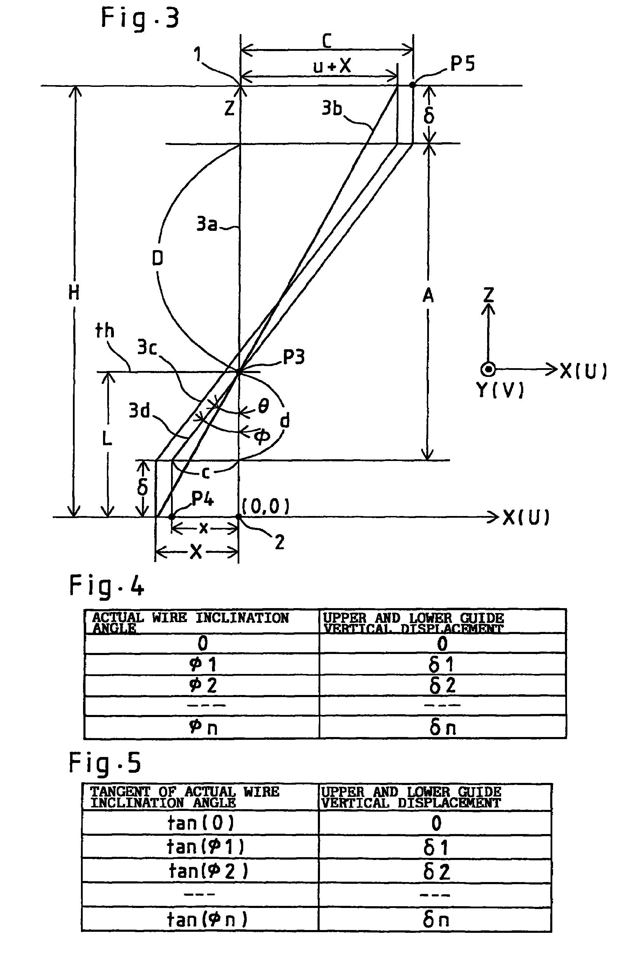

Fig. 3 is a conceptual diagram that represents the principle underlying this measurement. While omitting the details of the upper wire guide 1 and lower wire guide 2 in Fig. 3, as shown therein, the perpendicular clearance H therebetween in the vertical is H.

Step 1: While holding the perpendicular clearance H constant, the upper wire guide 1 is moved along the U and V axes, pulling the wire 3 perpendicularly relative to the X-Y plane (i.e. along the Z axis), as indicated by line 3a, and a thin sheet th having a round hole in it is passed over the wire 3.

This thin sheet th is integrally fixed to a table in the wire electrical discharge machine in a plane parallel to the X-Y plane at a height (Z-axis distance) L from the lower wire guide 2. This thin sheet th, accordingly, does not move with either the upper wire guide 1 or the lower wire guide 2. This thin sheet th should preferably be made of an electrically conductive metal sheet so that the wire can be detected by the inside circumferential edge of the hole therein.

Step 2: Next, the lower wire guide 2 is fed along in the X and Y axial dimensions until the center P3 of the round hole in the thin sheet th coincides with the center of the wire 3, which position is established as the origin position where X = 0 and Y = 0.

The operation for positioning the center of the wire 3 at the center of the round hole in the thin sheet th is already known in the prior art. There is, for example, the method of feeding the lower wire guide 2 in positive and negative directions, detecting two positions on the left and right where the wire 3 contacts the inner circumference of the round hole, and finding the mean X-coordinate value for these two points to determine the X-axis component of P3, and, again, feeding the lower wire guide 2 in the Y-axis reciprocal direction, detecting the two fore and aft positions where the wire 3 contacts the inner circumference of the round hole, and finding the mean Y-coordinate value of these two points to determine the Y-axis component of P3. It is also possible to use a thin sheet th having a slit therein, paralleling the Y axis, instead of a round hole, in which case, naturally, one would only need to find the X-axis component of P3.

Step 3: Next, in accordance with a conventional control method, a feed command is given to the upper wire guide 1 in the U-axis direction so that the wire 3 will, theoretically, be inclined by an angle θ relative to the vertical (Z dimension).

In Fig. 3, the condition wherein the wire 3 is inclined by the command inclination angle θ to the vertical dimension (Z-axis dimension) is indicated by the line 3b. Actually, however, due to the rigidity of the wire 3, the effective upper-end support position (point where the wire 3 blends) for the wire 3 falls slightly below the upper wire guide 1 (by δ), while the effective lower-end support position (point where the wire 3 bends) rises slightly above the lower wire guide 2 (by δ). Therefore, the wire 3 does not actually assume the attitude indicated by the line 3b, but instead assumes the attitude indicated by the line 3c. In other words, the actual inclination of the wire 3 (hereinafter noting that wire which is in the condition indicated by the line 3c as the wire 3c) will be larger than the command inclination angle θ. Hereinafter, the actual inclination of the wire 3c at this time is called the actual inclination angle φ.

Taking H as the perpendicular clearance between the upper wire guide 1 and the lower wire guide 2, and θ as the command inclination angle, the quantity u by which the upper wire guide 1 should be fed along the U axis is theoretically given by Equation 1 below.

$$\text{Eq 1} \qquad u = H \times \tan \theta$$

Step 4: Next, in this condition, the lower wire guide 2 is moved along the x axis, and an operation is performed to again position the wire 3c in the center P3 of the round hole in the thin sheet th. When the wire 3c is positioned in the center P3 of the round hole in the thin sheet th, the position (x, 0) of the lower wire guide 2 is detected. In the example shown in Fig. 3, the value x of this X-axis component becomes a minus value.

When, as shown in Fig. 3, the height L of the thin sheet th is 1/2 the value of H or less, and a feed of u (= H x tan θ) is imparted to the upper wire guide 1 along the U axis to give the wire 3 the command inclination angle θ, while this is happening, the wire 3c contacts the inner edge of the round hole in the thin sheet th. Centering of the wire 3 begins from this state, then the wire 3c finally moves to the P3 position, assuming the attitude as shown by line 3d.

That is, the wire 3C is moved in the positive X axis direction to the position 3d by the centering of the wire as shown in Fig. 3 and then the position (X, 0) of the lower wire guide 2 is read.

The position (X, 0) of the lower wire guide 2, assuming that, in Fig. 3, the wire 3 passing through the center P3 of the round hole in the thin sheet th is inclined by the command inclination angle θ with respect to the vertical (Z-axis) direction, is given by Equation 2 below

$$\text{Eq 2} \qquad X = -L \times \tan \theta$$

In the example shown in Fig. 3, it is presumed that the upper wire guide 1 and lower wire guide 2 have the same structure, so that both upward and downward displacements can be treated as δ. Accordingly, the relationship c/d = C/D will hold between the various distances c, d, C, and D, indicated in Fig. 3, from which, in turn, Equation 3 below follows.

Eq 3

$$\frac{L-\delta}{-x} = \frac{H-L-\delta}{(u+X)+(x-X)} = \frac{H-L-\delta}{u+x}$$

Solving for δ in Equation 3, Equation 4 below is obtained.

Eq 4

$$\delta = \frac{L \cdot u + H \cdot x}{u + 2 \cdot x}$$

Furthermore, the actual perpendicular clearance A between the upper-end support position and the lower-end support position for the wire 3 is given by Equation 5.

Eq 5       $$A = H - 2 \cdot \delta$$

And the actual inclination angle φ of the wire 3d is given by Equation 6.

Eq 6

$$\phi = \tan^{-1} \frac{u}{A}$$

In other words, tan φ = u/A.

Thereupon, the command inclination angle θ is changed with suitably small increments, the operations described in the foregoing are executed repeatedly while inputting various values of θ, the actual inclination angle θ and displacement δ values are determined by the operations with each change, and, based on the relationship between the two, a displacement memory file such as that shown in Fig. 4 is created and pre-stored in the CMOS memory 14.

Furthermore, as will be described below, in terms of actual process control data for the numerical control device 10, it will be more convenient to determine the value of tan φ beforehand and create a displacement memory file such as that represented in Fig. 5 for pre-storage in the CMOS memory 14.

Actual correction processing is performed with reference to the displacement memory file represented in Fig. 5 or Fig. 4, based on the relationship between the command value (actual inclination angle) φ for the inclination considered to be necessary for the taper machining and the corresponding displacement value δ.

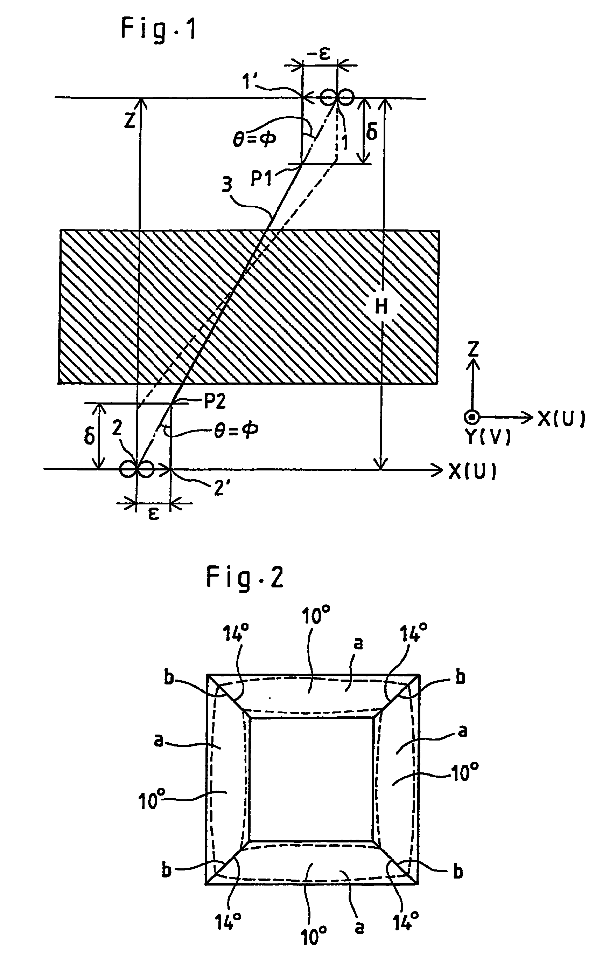

Fig. 1 is a diagram given to explain the principle underlying taper angle correction. When the U and V axes are moved to impart the wire 3 an inclination of the command inclination angle θ commanded by the NC program, the line connecting the support points of the upper and lower wire guides 1 and 2 is placed at the command inclination angle θ as indicated by the dotted broken line in Fig. 1. As noted previously, however, the bending points of the wire 3 will move by δ, the wire 3 will lie along the path indicated by the broken line in Fig. 1, and the command inclination angle θ will not be maintained.

Thereupon, by driving the U and V axes, the upper wire guide 1 is moved by -ε (correction quantity) therefrom, while, by driving the X and Y axes, the lower wire guide 2 is moved by ε (correction quantity), thereby maintaining the command inclination angle θ between the points where the wire 3 bends. The path of the wire 3 at this time becomes the path indicated by the solid line 3, coinciding with the dotted broken line that connects the support points of the upper and lower wire guides 1 and 2.

Thus when the condition prevails wherein the actual inclination angle φ of the wire 3 coincides with the command inclination angle θ (that is, when the upper wire guide 1 is in position 1' and the lower wire guide 2 is in position 2', as shown in Fig. 1), the displacement δ in the vertical direction in the upper and lower wire guides 1 and 2 will provide a value that corresponds with the actual wire inclination angle φ (= θ), using the table in Fig. 4 or Fig. 5. From this value of δ the correction quantity ε is found, the upper wire guide 1 is moved by -ε from the command position therefor, by driving the U and V axes, and the lower wire guide 2 is moved by ε from the command position therefore, by driving the X and Y axes. When this is done, the upper wire guide 1 arrives at position 1' in Fig. 1, while the lower wire guide 2 arrives at position 2', whereupon the actual inclination angle $\phi$ of the wire 3 can be made to coincide with the commanded inclination angle $\theta$.

Thereupon, the command inclination angle $\theta$ is first found from the values of U and V delivered from the NC program. As noted earlier, however, by adding the correction ε to the values of U and V, the command inclination angle $\theta$ becomes the actual inclination angle $\phi$, so that the command inclination angle is hereinafter called "$\phi$." In other words, the command inclination angle $\phi$ is found using Equation 7 below.

Eq 7

$$\phi = \tan^{-1} \frac{\sqrt{U^2 + V^2}}{H} \, , \, \tan\phi = \frac{\sqrt{U^2 + V^2}}{H}$$

Next, from the displacement memory file shown in Fig. 4, the displacement value δ corresponding to the command inclination angle $\phi$ found by Equation 7 is determined. When a value corresponding to the command inclination $\phi$ is not found in the displacement memory file of Fig. 4, $\phi$ is determined from the neighboring values ($\phi i$ - δ1; $\phi i$ + 1 - δi + 1), using Equation 8 given below.

Eq 8

$$\delta = \delta_i + \frac{\delta_{i+1} - \delta_i}{\phi_{i+1} - \phi_i} \cdot (\phi - \phi_i) , \, \delta = \delta_i + \frac{\delta_{i+1} - \delta_i}{\tan\phi_{i+1} - \tan\phi_i} \cdot (\tan\phi - \tan\phi_i)$$

As shown in Fig. 1, in order to cause the wire 3 to incline by an angle of $\phi$ (identical with command angle $\theta$), the upper wire guide 1 currently located at the position indicated by 1 must be moved by ε using U and V axis commands, in the negative direction to the position indicated by 1', while the lower wired guide 2 currently at position 2 must be moved by ε using X and Y axis commands, in the positive direction to the position indicated by 2'. This movement amount (correction amount) ε is determined from the value of δ found from the displacement memory file, using Equation 9 below.

Eq 9 $\qquad \varepsilon = \delta \tan \phi \quad (= \delta \tan \theta)$

However, this correction quantity ε for the upper wire guide 1 is generally a movement distance on the U-V plane, having U and V components ($\Delta u$, $\Delta v$), while the correction quantity ε for the lower wire guide 2 is generally a movement distance on the X-Y plane, having X and Y components ($\Delta x$, $\Delta y$). That is, in actual practice, $\Delta u$ and $\Delta v$ are given as the correction quantity ε for the upper wire guide 1, while $\Delta x$ and $\Delta y$ are given as the correction quantity ε for the lower wire guide 2. The quantities $\Delta x$ and $\Delta y$ are given by Equations 10 and 11 below.

Eq 10

$$\Delta x = \varepsilon \cdot \frac{U}{\sqrt{U^2 + V^2}} = \delta \cdot \frac{U}{H}$$

Eq 11

$$\Delta y = \varepsilon \cdot \frac{V}{\sqrt{U^2 + V^2}} = \delta \cdot \frac{V}{H}$$

The directionality of the correction quantity for the upper wire guide 1 will be opposite to the directionality of the lower wire guide 2, resulting in Δu = -Δx in the U-axis direction andΔv = -Δy in the V-axis direction. However, the upper wire guide 1 is moved by the correction values Δx and Δy of the lower wire guide 2, wherefore it is necessary to cancel the movement of the correction quantity for the upper wire guide 1, resulting in actual correction values of Δu = -2Δx and Δv = -2Δy.

That being so, all that is needed is to output the horizontal movement quantities X and Y for the upper wire guide 1 and lower wire guide 2 along the U and V axes given by the numerical control device 10, which are superimposed by the correction values Δu and Δv and Δx and Δy, respectively, as described above.

A description is given now of the content of the correction processes actually performed by the numerical control device 10.

In wire discharge machining, moreover, in addition to complex taper machining, there are also cases where simple shapes such as rectangular parallelepipeds and cylindrical shapes are machined, as well as cases where rough taper machining is sufficient. In this embodiment, therefore, GOO commands for executing correction processing and GXX commands for terminating correction processing are used so that only those segments of NC programs bounded by a GOO and a GXX are subjected to correction processing based on the principle described in the foregoing.

It is possible, alternatively, to omit description of the GXX command, so that correction processing is executed for all of the program following a GOO command.

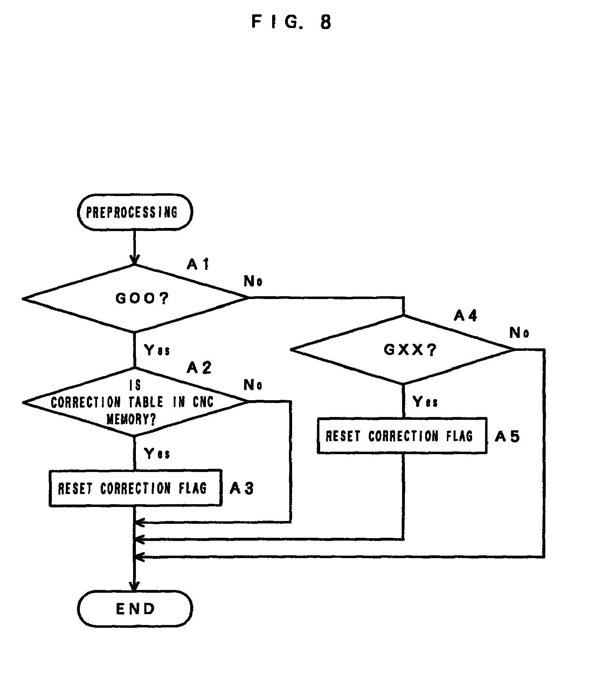

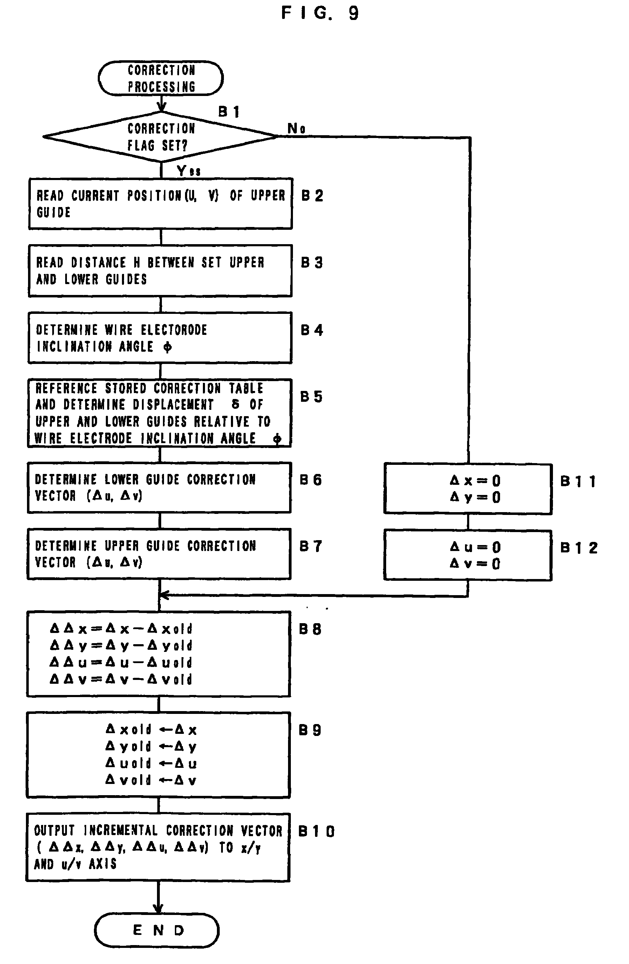

Fig. 8 is a flowchart indicating the main routines for preprocessing wherein the processor 11 reads in a program one block at a time, while Fig. 9 is a flowchart indicating the main routines for movement commands executed reiteratively every prescribed period, based on movement command data generated by the preprocessing.

A description will now be given of taper machining correction processing based on the numerical control device 10 in this embodiment, making reference to Fig. 8 and 9. However, description of that portion of preprocessing for calculating theoretical movement command data for horizontal movement quantities along the X, Y, U, and V axes (i.e. values not including correction quantities) considered necessary for attaining command inclination angles ϕ provided by the NC program, and of that portion of pulse distribution processing for calculating movement commands (i.e. values not including correction quantities) for each pulse distribution period, based on the movement command data, is omitted because these portions of the processing are the same as in the prior art. The description below rather gives emphasis to those portions pertaining to correction quantity calculation and output.

The processor 11, having read in one block of an NC program in the preprocessing routines indicated in Fig. 8, first determines whether that block is a GOO command for beginning execution of correction processing (step A1), or a GXX command for terminating correction processing (step A2), or some other command or data.

The processing is altogether the same as in the prior art when the block read in is something other than a GOO command or a GXX command.

When a GOO command has been read in, that is, when the decision result in step A1 is true (Yes), the processor 11 thereupon determines whether or not a displacement memory file has been registered in the CMOS memory 14 (step A2), and sets a correction flag only in cases where a displacement memory file has been registered (step A3).

If no displacement memory file is registered, it is not possible to execute correction processing every movement command distribution period, so the correction is not set in that case even when a GOO command has been read in. The processing in this case is altogether the same as in the prior art.

When not a GOO command but rather a GXX command has been read in, that is, when the decision result in step A4 is true, the processor 11 resets the correction flag (step A5), and cancels execution of correction processing every pulse distribution period.

In the processing to be done every given period shown in Fig. 9, on the other hand, the processor 11, having started movement command distribution processing, first determines whether or not the correction flag has been set (step B1).

If the correction flag is not set, there is no need to implement substantive correction processing, so that the processor 11 initializes the values in correction vector storing registers Δx and Δy to zero (step B11) and at the same time initializes the values in the correction vector storing registers Δu and Δv to zero also (step B12).

The correction vector storing registers Δx, Δy, Δu, and Δv, respectively, are registers provided for storing the correction quantities Δx, Δy, Δu, and Δv indicated by Equations 10 and 11.

The processor 11 next subtracts the values in previous period correction storing registers Δxold, Ayold, Δuold, and Δvold, wherein have been stored the correction quantities calculated in the pulse distribution processing for the previous period, from the values Δx, Δy, Δu, and Δv, respectively, either calculated as correction quantities this period or initialized this period, thereby obtains the additions to the correction quantities to be output at this pulse distribution period, and stores them in incremental correction storing registers ΔΔx, ΔΔy, Δu, and ΔΔv (step B8). The processor 11 then updates the contents of the previous period correction storing registers Δxold, Δyold, Δuold, and Δvold with the values of the correction quantities Δx, Δy, Δu, and Δv calculated this period (step B9).

The processor 11 next superimposes the values of the incremental correction movement commands ΔΔx, ΔΔy, ΔΔu, and ΔΔv for the pulse distribution period at issue, determined in step B8, onto the incremental movement commands determined in processing that is the same as in the prior art, that is, onto the incremental movement commands for one period for the horizontal movement quantities along the X, Y, U, and V axes made necessary in order to attain the command inclination angle φ given by the NC program, and distributively outputs these to the serve melons that drive the upper wire guide 1 and lower wire guide 2 horizontally (step B10).

As noted already, when the correction flag is not set, the values of Δx, Δy, Δu, and Δv will always be zero, but, in some cases, the correction quantities calculated the previous period will be contained in Δxold, Δyold, Δuold, and Δvold. In such cases, an operation will be executed to cancel the corrections.

When, on the other hand, the decision result in step B1 is true, that is, when it is necessary to execute correction processing, the processor 11 first reads in the values of the commanded current positions U and V for the upper wire guide 1 referenced to the position of the lower wire guide 2, and the perpendicular clearance H between the upper wire guide 1 and lower wire guide 2 as currently set (steps B2 and B3), and determines the value either of φ or tan φ based on Equation 7 (step B4).

The processor 11 next references the displacement memory file shown in Fig. 3 or Fig. 4, and reads in the value of δ corresponding to the value of φ or tan φ calculated in step B4 from the displacement memory file. When a value corresponding to φ or tan φ, as indicated in Fig. 5 or Fig. 4, cannot be found from the displacement memory file, algebraic processing is conducted on the basis of Equation 8 to calculate a value of δ corresponding to φ or tan φ calculated in step B4 (step B5).

By using the displacement memory file shown in Fig. 5, and calculating tan φ, the need to calculate $\tan^{-1}$ is avoided, thereby reducing the computation load on the processor.

The processor 11, having found the value of the displacement δ in this fashion, next uses the formulas given in Equations 10 and 11 to determine the correction quantities Δx and Δy for the lower wire guide 2 (step B6), and the correction quantities Δu and Δv for the upper wire guide 1 (step B7).

These correction quantities Δx, Δy, Δu, and Δv, however, as indicated in Fig. 1, represent deviations between the positions of the upper wire guide 1 and lower wire guide 2 before and after correction, so that it is necessary to convert these to incremental movement commands for one pulse distribution period.

More specifically, if the values of the correction quantities Δxold, Δyold, Δuold, and Δvold for the previous period are subtracted from the values of the correction quantities Δx, Δy, Δu, and Δv calculated in steps B6 and B7, the values of the incremental correction movement commands ΔΔx, ΔΔy, ΔΔu, and ΔΔv to be output this pulse distribution period are obtained (step B8).

Next, the processor 11 updates the contents of the previous period correction storing registers Δxold, Δyold, Δuold, and Δvold with the values of the correction quantities Δx, Δy, Δu, and Δv calculated this period (step B9). The processor 11 then superimposes the values of the incremental correction movement commands ΔΔx, ΔΔy, ΔΔu, and ΔΔv for the pulse distribution period at issue, determined in step B8, onto the incremental movement commands determined in processing that is the same as in the prior art, that is, onto the incremental movement commands for one period for the horizontal movement quantities along the U and V axes made necessary in order to attain the command inclination angle φ given by the NC program, and distributively outputs these to the servo motors that drive the upper wire guide 1 and lower wire guide 2 horizontally (step B10).

Thereafter, as a result of reiteratively executing the correction routines flowcharted in Fig. 9 every pulse distribution period, the attitudinal variation in the wire 3 caused by displacements in the upper-end support position and lower-end support position arising from the rigidity of the wire 3 is automatically corrected, and wire discharge machining can thus be performed while constantly maintaining the inclination angle φ given as a command by the NC program.

Taking the example of finishing the outer surfaces of a square pyramidal part, in Fig. 2 are shown the differences in the wire guide paths when the correction processing shown in Fig. 9 is performed and when it is not performed.

Fig. 2 is a plan, viewing from above the paths of the wire guides when machining the square pyramid. The solid line path represents the path of the wire guides when the correction processing shown in Fig. 9 is not performed, while the broken line path represents the path of the wire guides when the correction processing in Fig. 9 is performed.

In this example, the four faces a about the periphery of the square pyramid are inclined at an angle of 10 degrees relative to the vertical (Z-axis dimension), while at the seams *b* of the four peripheral faces the inclination of the wire 3 is approximately 14 degrees. Therefore, while moving the wire 3 from one seam *b* to the next seam *b*, the inclination of the wire 3 relative to the Z axis must be changed from 14 degrees to 10 degrees, and then to 14 degrees in a direction symmetrical with the first 14 degrees.

When the correction processing flowcharted in Fig. 9 are not performed, that is, when taper machining is performed according to the prior art, the actual inclination angle becomes larger, compared to the command inclination angle, the larger the inclination of the wire 3 is. Therefore, in a part that is supposed to be a square pyramid, a large fall-in occurs in the wire 3 in the portions where the command inclination angle becomes large, that is, as the seams *b* are the more closely approached to, whereupon the inclination of the wire 3 relative to the vertical (Z-axis dimension) changes in actual practice from (14 + $\alpha$) degrees to (10 + $\beta$) degrees, and then to (14 + $\alpha$) degrees in a direction symmetrical with the first (14 + $\alpha$) degrees. As a result, distortion occurs (such that $\alpha > \beta$). However, when the correction control flowcharted in Fig. 9 is implemented, the inclination of the wire 3 is always corrected so that it coincides with the command inclination angle, wherefore the path of the wire guides becomes the broken line path shown in Fig. 2, the inclination of the wire 3 relative to the vertical (Z-axis dimension) changes from 14 degrees to 10 degrees, and then to 14 degrees in a direction symmetrical with the first 14 degrees, so that an undistorted square pyramid shape can be obtained.

In the embodiment set forth in the foregoing, moreover, the example illustrated is that of a type of discharge processing machine wherein the lower wire guide is moved along the X and Y axes, but the correction method is the same in the case where the lower wire guide is fixed and the work (i.e. table) is moved along the X and Y axes, in which case only the direction of movement of the X and Y axes is different.

In a configuration wherein the work is fixed, and the upper and lower wire guides can be moved independently, the correction quantities for the lower wire guide driven along the X and Y axes are the same as in the embodiment set forth above, but the upper wire guide will not be moved by the correction of the lower wire guide, so that the correction quantities for the upper wire guide driven along the U and V axes will be $\Delta u = -\Delta x$ and $\Delta v = -\Delta y$.

In the embodiment set forth above, moreover, correction processing is described for the case where the structure of the upper wire guide 1 is the same as that of the lower wire guide 2, so that displacements of $\delta$ occur both at the upper-end support position and the lower-end support position for the wire 3. Even in cases where the structures of the upper wire guide 1 and lower wire guide 2 are different and the displacement in the upper-end support position and lower-end support position for the wire 3 differ, however, the process can be handled in the same way as described in the foregoing if one displacement memory file is prepared for storing the displacement $\delta 1$ on the upper wire guide 1 side and another displacement memory file is prepared for storing the displacement $\delta 2$ on the lower wire guide 2 side.

Furthermore, instead of storing displacements $\delta$ associated with the command inclination angles $\phi$ and then subjecting them to arithmetic processing, it is also permissible to directly store values of $\epsilon$ corresponding to the command inclination angle $\phi$ (or tan $\phi$) in the displacement memory file and thereby eliminate part of the arithmetic processing.

In the embodiment set forth above, moreover, the amount of displacement in the support points for the upper and lower wire glides was made constant irrespective of the perpendicular clearance H. However, it is also permissible, in cases where the displacement $\delta$ in the support points for the upper and lower wire guides fluctuates depending on the perpendicular clearance H between the upper wire guide 1 and the lower wire guide 2, to create a fluctuation memory file for each perpendicular clearance H, and store these in the CMOS memory 14, so that the fluctuation memory file to be referenced according to the perpendicular clearance H will be selected.

**Claims**

1. A numerical control method for a wire electrical discharge machine that performs taper machining, on a work secured to a machining table, by a wire (3) supported by wire guides (1, 2) in a configuration comprising an X axis and a Y axis along which the machining table or a first wire guide (2) moves in an X-Y plane, and a U axis and a V axis along which a second wire guide (1) moves in a U-V plane that lies parallel to the X-Y plane, the method being **characterised by** steps of:

   storing in advance, in memory, a table indicating the upward and downward displacements of the wire support positions of the first and second wire guides (1,2) which correspond to respective wire electrode inclination angles ($\phi$);
   computing, at successive control periods, wire electrode inclination angles ($\phi$) from the deviations between the position vectors of the first wire guide (2) relative to the second wire guide (1) in the X-Y plane and in the U-V plane;
   obtaining the upward and downward displacements in the wire support positions of the first and second wire guides (1, 2) from the computed wire electrode inclination angles ($\phi$) using said table, and then converting the obtained upward and downward displacements in the wire support positions to determine horizontal-direction correction vectors ($\Delta x$, $\Delta y$, $\Delta u$, $\Delta v$) in the X-Y plane and the U-V plane for the respective wire guides (2, 1); and
   correcting, based on those determined correction vectors, the position of the processing table or the first wire guide (2) and/or the second wire guide (1).

2. A numerical control method for a wire electrical discharge machine according to claim 1, wherein said upward and downward displacements indicated by said table are Z-axis displacements ($\delta$) of effective support points (P1, P2) of the first and second wire guides (1, 2).

3. A numerical control method for a wire electrical discharge machine according to claim 2, wherein said correcting of the position of the processing table or the first wire guide (1) and the second wire guide (2) is effected by dividing correction quantities ($\varepsilon$) corresponding to said obtained Z-axis displacements ($\delta$), into components for said X, Y, U and V axes, applying these components to those axes, and correcting wire guide positions.

4. A numerical control method for a wire electrical discharge machine according to claim 1, wherein said displacements indicated by said table are correction quantities ($\varepsilon$) of support points of the first and second wire guides (1, 2) in the X-Y and U-V plane, and said correcting of the position of the processing table or the first wire guide (2) and the second wire guide (1) is effected by dividing said correction quantities ($\varepsilon$) into components for said X, Y, U and V axes, applying these components to those axes, and correcting wire guide positions.

**Patentansprüche**

1. Methode zur numerischen Steuerung einer Drahterosionsmaschine zum konisch Schneiden eines Werkstücks welches an einem Maschinentisch befestigt ist mittels eines Drahtes (3) welcher mittels Drahtführungen (1, 2) geführt wird, wobei die Konfiguration eine X Achse und eine Y Achse vorsieht in welchen Achsen der Bearbeitungstisch oder eine erste Drahtführung (2) sich in einer X-Y Ebene bewegt, und eine U Achse und eine V Achse in welchen Achsen eine zweite Drahtführung sich in einer U-V Ebene bewegt welche parallel zur X-Y Ebene liegt, wobei die Methode folgende Schritte umfasst:

In einem Speicher wird eine Tabelle gespeichert in welcher die obere und die untere Verschiebung der Haltevorrichtung des Erosionsdrahtes der ersten und der zweiten Drahtführung (1, 2) aufgeführt ist, welche einem jeweiligen Neigungswinkel ($\Phi$) der Drahtelektrode entspricht;
Berechnung des Neigungswinkels ($\Phi$) in kontinuierlichen Perioden anhand der Abweichungen zwischen dem Positions- Vektor der ersten Drahtführung (2) relativ zur zweiten Drahtführung (1) in der X-Y Ebene und der U-V Ebene;
Erlangung der oberen und unteren Verschiebungs-Position der Haltevorrichtung des Drahtes für die erste und zweite Drahtführung (1, 2) aus dem errechneten Neigungswinkel ($\Phi$) des Erosionsdrahtes mittels der Tabelle und anschliessender Konvertierung der oberen und unteren Verschiebung der Haltevorrichtung des Erosionsdrahtes in die horizontalen Korrekturwerte Vektoren ($\Delta x$, $\Delta Y$, $\Delta u$, $\Delta v$) in der X-Y Ebene und der U-V Ebene für die jeweiligen Drahtführungen (2, 1); und
Korrektur der Position des Werktisches oder der ersten Drahtführung (2) und/oder der zweiten Drahtführung (1) anhand dieser ermittelten Korrekturwerte.

2. Methode zum numerischen Steuern einer Drahterosionsmaschine gemäss Anspruch 1, wobei die oberen und unteren Verschiebungen gemäss der genannten Tabelle Z-Achsen Verschiebungen ($\delta$) der effektiven Haltepunkte (P1, P2) der ersten und zweiten Drahtführung (1, 2) sind.

3. Methode zum numerischen Steuern einer Drahterosionsmaschine gemäss Anspruch 2, wobei die Korrektur der Position des Werktisches oder der ersten Drahtführung (2) und der zweiten Drahtführung (1) dadurch erfolgt, dass die Korrekturwerte ($\varepsilon$) welche der Z-Achsen Verschiebung ($\delta$) entsprechen in Komponenten zur X, Y, U und V Achse aufgeteilt werden, diese Komponenten den Achsenwerten zugefügt werden und die Korrektur der Positionen der Drahtführungen erfolgt.

4. Methode zum numerischen Steuern einer Drahterosionsmaschine gemäss Anspruch 1, wobei die **genannten Verschiebungen gemäss der genannten Tabelle** Korrekturwerte ($\varepsilon$) der Haltepunkte der ersten und zweiten Drahtführungen (1, 2) in der X- Y Ebene und der U-V Ebene sind und die genannte Positions-Korrektur des Bearbeitungstisches oder der ersten Drahtführung (2) und der zweiten Drahtführung (1) durch Aufteilung der Korrekturwerte ($\varepsilon$) in Komponenten für die X, Y, U und V Achsen erfolgt, diese Komponenten den Achsenwerten zugefügt werden und die Korrektur der Positionen der Drahtführungen erfolgt.

**Revendications**

1. Procédé de contrôle numérique pour une machine d'électro-érosion à fil qui effectue l'usinage conique sur un ouvrage fixé sur une table d'usinage par un fil (3) supporté par des guides filaires (1, 2), dans une configuration comprenant un axe X et un axe Y le long desquels se déplace la table d'usinage ou un premier guide filaire (2) dans un plan X-Y, et un axe U et un axe V le long desquels se déplace un deuxième guide filaire (1) dans un plan U-V parallèle au plan X-Y, le procédé étant **caractérisé par** les étapes consistant à :

   stocker à l'avance, en mémoire, un tableau indiquant les déplacements vers le haut et vers le bas des positions de support filaire du premier guide filaire (1) et du deuxième guide filaire (2) qui correspondent aux angles d'inclinaison d'électrode filaire respectifs ($\phi$) ;
   calculer, à des périodes de contrôle successives, les angles d'inclinaison d'électrode filaire ($\phi$) entre les vecteurs de position du premier guide filaire (2) par rapport au deuxième guide filaire (1) dans le plan X-Y et dans le plan U-V ;
   obtenir les déplacements supérieurs et inférieurs des positions de support filaire du premier guide filaire (1) et du deuxième guide filaire (2) à partir des angles d'inclinaison d'électrode filaire ($\phi$) calculés en utilisant ledit tableau, puis en convertissant les déplacements supérieurs et inférieurs obtenus aux positions de support filaire pour déterminer les vecteurs de correction dans la direction horizontale ($\Delta$x, $\Delta$y, $\Delta$u, $\Delta$v) dans le plan X-Y et dans le plan U-V pour les guides filaires respectifs (2, 1) ; et
   corriger, sur la base de ces vecteurs de correction déterminés, la position de la table de traitement ou du premier guide filaire (2) et/ou du deuxième guide filaire (1).

2. Procédé de contrôle numérique pour une machine d'électro-érosion à fil selon la revendication 1, dans lequel lesdits déplacements supérieurs et inférieurs indiqués par ledit tableau sont des déplacements selon l'axe Z ($\delta$) des points de support effectifs (P1, P2) du premier guide filaire (1) et du deuxième guide filaire (2).

3. Procédé de contrôle numérique pour une machine d'électro-érosion à fil selon la revendication 2, dans lequel ladite correction de la position de la table de traitement ou du premier guide filaire (1) et du deuxième guide filaire (2) est effectuée en divisant les quantités de correction ($\varepsilon$) correspondant aux dits déplacements obtenus ($\delta$) selon l'axe Z en composants pour lesdits axes X, Y, U et V, en appliquant ces composants à ces axes, et en corrigeant les positions des guides filaires.

4. Procédé de contrôle numérique pour une machine de décharge électrique filaire selon la revendication 1, dans lequel lesdits déplacements indiqués par ledit tableau sont des quantités de correction ($\varepsilon$) des points de support du premier guide filaire (1) et du deuxième guide filaire (2) dans le plan X-Y et dans le plan U-V, et ladite correction de la position de la table de traitement ou du premier guide filaire (1) et du deuxième guide filaire (2) est effectuée en divisant lesdites quantités de correction ($\varepsilon$) en composants pour lesdits axes X, Y, U et V, en appliquant ces composants à ces axes, et en corrigeant les positions des guides filaires.

Fig.1

Fig.2

Fig·3

Fig·4

| ACTUAL WIRE INCLINATION ANGLE | UPPER AND LOWER GUIDE VERTICAL DISPLACEMENT |
|---|---|
| 0 | 0 |
| $\phi 1$ | $\delta 1$ |
| $\phi 2$ | $\delta 2$ |
| - - - | - - - |
| $\phi n$ | $\delta n$ |

Fig·5

| TANGENT OF ACTUAL WIRE INCLINATION ANGLE | UPPER AND LOWER GUIDE VERTICAL DISPLACEMENT |
|---|---|
| $\tan(0)$ | 0 |
| $\tan(\phi 1)$ | $\delta 1$ |
| $\tan(\phi 2)$ | $\delta 2$ |
| - - - | - - - |
| $\tan(\phi n)$ | $\delta n$ |

Fig·6

# FIG. 7

# F I G. 8

PREPROCESSING

A1 GOO? No

Yes A2 IS CORRECTION TABLE IN CNC MEMORY? No

Yes

RESET CORRECTION FLAG A3

A4 GXX? No

Yes

RESET CORRECTION FLAG A5

END

F I G. 9

**EP 0 920 945 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0246333 A